# EUROPEAN PATENT SPECIFICATION

(11) **EP 4 229 112 B1**
(45) Date of publication and mention of the grant of the patent: **07.08.2024**
(21) Application number: 21786827.2
(22) Date of filing: 30.09.2021
(51) Int. Cl.: C08G 65/334, C08G 65/00, C08G 65/333, C08G 65/337, C08L 71/00

(54) **NOVEL (PER)FLUOROPOLYETHER POLYMERS AND USE THEREOF**
NEUARTIGE (PER)FLUORPOLYETHERPOLYMERE UND VERWENDUNG DAVON
NOUVEAUX POLYMÈRES (PER)FLUOROPOLYÉTHER ET LEUR UTILISATION

(30) Priority: 14.10.2020 EP 20201711
(43) Date of publication of application: 23.08.2023
(73) Proprietor: Solvay Specialty Polymers Italy S.p.A., 20021 Bollate (MI) (IT)
(72) Inventor: FONTANA, Simonetta Antonella, 20142 MILANO MI (IT); LOTIERZO, Andrea, 20861 Brugherio MB (IT); THOMSON, Mary, 20133 Milano MI (IT)
(74) Representative: Ferri, Isabella
(86) International application number: PCT/EP2021/076919
(87) International publication number: WO 2022/078766

(56) References cited:
- EP-A1- 3 312 242
- WO-A1-2016/079195
- WO-A1-2018/005317
- WO-A1-2018/080639
- WO-A1-2019/106366
- WO-A2-2010/009191
- US-B2- 10 414 861
- US-B2- 10 723 839

## Description

### Cross-reference to related patent applications

This application claims the priority of patent application filed on 14 October 2020 in EUROPE with Nr. 20201711.7.

### Technical Field

The present invention relates to compositions comprising novel (per)fluoropolyether polymers, endowed with antimicrobial properties, to methods for the manufacture thereof and to their use to provide compositions having antimicrobial properties.

### Background Art

The use of (per)fluoropolyether (PFPE) polymers as ingredients in the manufacture of anti-soil coating compositions, for coating different types of substrates is known in the art. For example, EP 3312242 (3M Innovative Properties Company) discloses protective coating compositions with mixed functionalities, wherein PFPE are mentioned among other backbones; WO 2016/079195 (Solvay Specialty polymers Italy S.p.A.) discloses zwitterionic derivatives of PFPE, which are disclosed as suitable for coating applications; WO 2019/106366 (Sphere Fluidic Limited) discloses surfactants comprising perfluoropolyether structure.

Among the others, the coating of security documents, such as notably banknotes, using such PFPE polymers was disclosed for example in WO 2012/055885 (Oberthur Fiduciaire SAS) and WO 2013/045496 (Oberthur Fiduciaire SAS, Solvay Specialty Polymers Italy S.p.A.).

Coatings having anti-bacterial and/or anti-viral properties have been also disclosed in the art, for example in JP2014237227 (Central Glass Co.), TW201512339 (Alpha Bright Int. Co., LTD.), US 2015/191608 (Industrial Academic Cooperation Group Seoul National University; Samsung Electronics CO., LTD.; Snu R And DB Foundation); WO 2016/153230 (Ceko Co., LTD.); CN105176342 (Xiamen Boensi Applic Material Science and Technology CO., LTD.).

However, the recent spread of coronavirus disease (COVID-19) caused by severe acute respiratory syndrome coronavirus 2 (SARS-CoV-2) increased the importance of developing compositions endowed with antimicrobial (including but not limited to anti-bacterial, anti-fungal and anti-viral properties), such compositions being suitable for coating a wide variety of substrates, including notably paper, banknotes, glass and plastic, notably for electronic and smart devices.

### Summary of invention

Within this frame, the Applicant faced the problem of developing novel polymers endowed with antimicrobial properties.

More in particular, the Applicant developed novel (per)fluoropolyether (PFPE) polymers endowed with antimicrobial properties, said properties being provided by specific functional group(s) bonded to the (per)fluoropolyether backbone.

Advantageously, the chemical structure of the novel PFPE polymers according to the present invention is such that the polymers are endowed with antimicrobial properties, while providing the properties of coatings, such as notably transparency together with water- and oil-repellency.

Thus, in a first aspect, the present invention relates to a composition [composition (C^{POL})] comprising :
- a (per)fluoropolyether polymer [polymer (P^{P})] comprising a (per)fluoropolyether chain [chain (R_{pf})] having two chain ends bonded to opposite sides of said chain (R_{pf}),
   wherein
   one chain end comprises at least one group comprising at least one quaternary ammonium salt group [group (N⁺)] and
   the other chain end comprises at least one group selected in the group consisting of: alkoxysilane [group (Si)] and cross-linkable group, preferably selected from unsaturated moiety [group (U)] and epoxide [group (E)];
- a (per)fluoropolyether polymer [polymer (P^{U})] comprising a (per)fluoropolyether chain [chain (R_{pf})] having two chain ends bonded to opposite sides of said chain (R_{pf}),
   wherein both chain ends comprise one group elected in the group consisting of: alkoxysilane [group (Si)] and cross-linkable group, preferably selected from unsaturated moiety [group (U)] and epoxide [group (E)]; and
- a (per)fluoropolyether polymer [polymer (P^{N})] comprising a (per)fluoropolyether chain [chain (R_{pf})] having two chain ends bonded to opposite sides of said chain (R_{pf}), wherein both chain ends comprise at least one group (N⁺).

Advantageously, said composition (C^{POL}) comprises from about 5 to about 50 wt.% of said polymer (P^{P}) based on the total weight of composition (CP).

Said composition (C^{POL}) can be used as such to provide an antimicrobial coating or it can be used as ingredient (also referred to as "additive") in a solvent [solvent (S)].

Thus, in a second aspect, the present invention relates to a composition [composition (DIL)] comprising composition (C^{POL}) as defined above and at least one solvent [solvent (S)] selected in the group comprising :
(per)fluorinated fluids, optionally comprising at least one unsaturated moiety; hydrogenated fluids, optionally comprising at least one unsaturated moiety.

In a third aspect, the present invention relates to the use of composition (C^{POL}) or composition (DIL) as described above, to impart antimicrobial properties to a substrate.

### Description of embodiments

For the purpose of the present description and of the following claims:
- the use of parentheses around symbols or numbers identifying the formulae, for example in expressions like "polymer (P)", etc., has the mere purpose of better distinguishing the symbol or number from the rest of the text and, hence, said parenthesis can also be omitted;
- the acronym "PFPE" stands for "(per)fluoropolyether" and, when used as substantive, is intended to mean either the singular or the plural from, depending on the context;
- the term "(per)fluoropolyether" is intended to indicate fully or partially fluorinated polyether polymer;
- the expression "endowed with antimicrobial properties" is intended to indicate that the polymer is capable of killing or stopping the growth of microorganism, such as bacteria, virus and fungi.

Preferably, composition (C^{POL}) comprises
- from about 5.00 to about 50.00 wt.% of polymer (P^{P}),
- from about 0.01 to about 15.00 wt.% of polymer (P^{N}), and
- from about 35.00 to about 94.99 wt.% of polymer (P^{U}),
the amounts being based on 100 wt.% of said composition (C^{POL}).

More preferably, composition (C^{POL}) comprises
- from about 5.00 to about 48.00 wt.% of polymer (P^{P}),
- from about 0.10 to about 12.00 wt.% of polymer (P^{N}) and
- from about 40.00 to about 85 wt.% of polymer (P^{U}),
the amounts being based on 100 wt.% of said composition (C^{POL}).

Said composition (C^{POL}) can further comprise a (per)fluoropolyether polymer [polymer (P^{x})] comprising a (per)fluoropolyether chain [chain (R_{pf})] having two chain ends bonded to opposite sides of said chain (R_{pf}), wherein one chain end comprises a perfluoroalkyl group and the other chain end comprises either at least one group (N⁺) as defined above or at least one group selected in the group consisting of: alkoxysilane [group (Si)] and cross-linkable group, preferably selected from unsaturated moiety [group (U)] and epoxide [group (E)].

When present, said polymer (P^{X}) is preferably in an amount up to 15 wt.% more preferably in amount from 0.01 to 12 wt.% and even more preferably from 0.05 to 10 wt.%, based on the total weight of composition (C^{POL}).

Preferably, in any of polymer (P^{P}), polymer (P^{U}), polymer (P^{N}) and polymer (P^{x}), said chain (R_{pf}) is a chain of formula

-D-(CFX^{#})_{z1}-O(R_{f})(CFX^{*})_{z2}-D^{*}-

wherein
z1 and z2, equal or different from each other, are equal to or higher than 1;
X^{#} and X^{*}, equal or different from each other, are -F or -CF₃,
provided that when z1 and/or z2 are higher than 1, X^{#} and X^{*} are -F;
D and D*, equal or different from each other, are a sigma bond or an alkylene chain comprising from 1 to 6 and even more preferably from 1 to 3 carbon atoms, said alkyl chain being optionally substituted with at least one perfluoroalkyl group comprising from 1 to 3 carbon atoms;
(R_{f}) comprises, preferably consists of, repeating units R°, said repeating units being independently selected from the group consisting of:
   (i) -CFXO-, wherein X is F or CF₃;
   (ii) -CFXCFXO-, wherein X, equal or different at each occurrence, is F or CF₃, with the proviso that at least one of X is -F;
   (iii) -CF₂CF₂CW₂O-, wherein each of W, equal or different from each other, are F, CI, H;
   (iv) -CF₂CF₂CF₂CF₂O-;
   (v) -(CF₂)ⱼ-CFZ-O- wherein j is an integer from 0 to 3 and Z is a group of general formula -O-R_{(f-a)}-T, wherein R_{(f-a)} is a fluoropolyoxyalkene chain comprising a number of repeating units from 0 to 10, said recurring units being chosen among the following : -CFXO- , -CF₂CFXO-, -CF₂CF₂CF₂O-, -CF₂CF₂CF₂CF₂O-, with each of X being independently F or CF₃ and T being a C₁-C₃ perfluoroalkyl group.

Preferably, z1 and z2, equal or different from each other, are from 1 to 10, more preferably from 1 to 6 and even more preferably from 1 to 3.

More preferably, D and D*, equal or different from each other, are a sigma bond, or a chain of formula -CH₂-, -CH₂CH₂- or -CH(CF₃)-.

Preferably, chain (R_{f}) complies with the following formula:

(R_{f}-I) -[(CFX¹O)_{g1}(CFX²CFX³O)_{g2}(CF₂CF₂CF₂O)_{g3}(CF₂CF₂CF₂CF₂O)_{g4}]-

-wherein
- X¹ is independently selected from -F and -CF₃,
- X², X³, equal or different from each other and at each occurrence, are independently -F, -CF₃, with the proviso that at least one of X is -F; - g1, g2 , g3, and g4, equal or different from each other, are independently integers ≥0, such that g1+g2+g3+g4 is in the range from 2 to 300, preferably from 2 to 100; should at least two of g1, g2, g3 and g4 be different from zero, the different recurring units are generally statistically distributed along the chain.

More preferably, chain (R_{f}) is selected from chains of formula:

(R_{f}-IIA) -[(CF₂CF₂O)ₐ₁(CF₂O)ₐ₂]-

-wherein:
- a1 and a2 are independently integers ≥ 0 such that the number average molecular weight is between 400 and 10,000, preferably between 400 and 5,000; both a1 and a2 are preferably different from zero, with the ratio a1/a2 being preferably comprised between 0.1 and 10;

   (R_{f}-IIB) -[(CF₂CF₂O)_{b1}(CF₂O)_{b2}(CF(CF₃)O)_{b3}(CF₂CF(CF₃)O)_{b4}]-
wherein:
b1, b2, b3, b4, are independently integers ≥ 0 such that the number average molecular weight is between 400 and 10,000, preferably between 400 and 5,000; preferably b1 is 0, b2, b3, b4 are > 0, with the ratio b4/(b2+b3) being ≥1;

   (R_{f}-IIC) -[(CF₂CF₂O)_{c1}(CF₂O)_{c2}(CF₂(CF₂)_{cw}CF₂O)_{c3}]-
wherein:
   cw = 1 or 2;
   c1, c2, and c3 are independently integers ≥ 0 chosen so that the number average molecular weight is between 400 and 10,000, preferably between 400 and 5,000; preferably c1, c2 and c3 are all > 0, with the ratio c3/(c1+c2) being generally lower than 0.2;

      (R_{f}-IID) -[(CF₂CF(CF₃)O)_{d}]-
   wherein:
      d is an integer > 0 such that the number average molecular weight is between 400 and 10,000, preferably between 400 and 5,000;

         (R_{f}-IIE) -[(CF₂CF₂C(Hal*)₂O)ₑ₁-(CF₂CF₂CH₂O)ₑ₂-(CF₂CF₂CH(Hal*)O)ₑ₃]-
      wherein:
         - Hal*, equal or different at each occurrence, is a halogen selected from fluorine and chlorine atoms, preferably a fluorine atom;
         - e1, e2, and e3, equal to or different from each other, are independently integers ≥ 0 such that the (e1+e2+e3) sum is comprised between 2 and 300.

Still more preferably, chain (R_{f}) complies with formula (R_{f}-III) here below:

(R_{f}-III) -[(CF₂CF₂O)ₐ₁(CF₂O)ₐ₂]-

-wherein:
- a1, and a2 are integers > 0 such that the number average molecular weight is between 400 and 10,000, preferably between 400 and 5,000, with the ratio a1/a2 being generally comprised between 0.1 and 10, more preferably between 0.2 and 5.

Preferably, in any of polymer (P^{P}), polymer (P^{N}) and polymer (P^{x}), group (N⁺) is selected in the group comprising, more preferably consisting of:

(N⁺-I) -N⁺(R^{h1})(R^{h2})(R^{h3})

wherein
each of R^{h1}, R^{h2}, and R^{h3} is independently selected from linear or branched alkyl chain having from 1 to 20 carbon atoms, more preferably from 1 to 18, even more preferably from 3 to 18, benzyl or at least two of R^{h1}, R^{h2}, and R^{h3} together with the nitrogen atom form a 5- or 6-membered aliphatic ring or R^{h1}, R^{h2}, and R^{h3} together with the nitrogen atom form a 5- or 6- membered aromatic ring .

Preferably, at least one of R^{h1}, R^{h2}, and R^{h3} is a linear or branched alkyl chain having from 6 to 20, more preferably from 6 to 18 carbon atoms.

Preferably, at least two of R^{h1}, R^{h2}, and R^{h3} are independently a linear or branched alkyl chain having from 1 to 6, more preferably from 1 to 4 carbon atoms.

Any of polymer (P^{P}), polymer (P^{N}) and polymer (P^{x}) comprises a counter-ion for said group (N⁺).

Said counter-ion is preferably selected from halogenide, such as chloride, iodide, bromide; mesylate, tosylate, triflate and nonaflate. Mesylate and tosylate are more preferred.

Preferably, in any of polymer (P^{P}), polymer (P^{N}) and polymer (P^{x}), group (N⁺) is bonded to one chain end of said chain (R_{pf}) via a sigma bond or via a poly(oxy)alkylene chain [chain (Rₐ)].

More preferably, said chain (Ra) comprises from 1 to 50 fluorine-free oxyalkylene units, said units being the same or different each other and being selected from -OCH(J)CH(J*)-, wherein each of J and J* is independently selected from hydrogen atom, straight or branched alkyl or aryl, preferably hydrogen atom, methyl, ethyl or phenyl.

Each of polymer (P^{P}) and polymer (P^{U}) preferably comprises at its chain end(s) group (U).

Preferably, in any of polymer (P^{P}) and polymer (P^{U}), said group (U) is selected in the group consisting of:

(U-I) -O-C(=O)-CR_{H}=CH₂

(U-II) -O-C(=O)-NH-CO-CR_{H}=CH₂

(U-III) -O-C(=O)-R^{A}-CR_{H}=CH₂

wherein
R_{H} is H or a C₁-C₆ alkyl group;
R^{A} is selected from the group consisting of (R^{A}-I) and (R^{A}-II):
   (R^{A}-I) 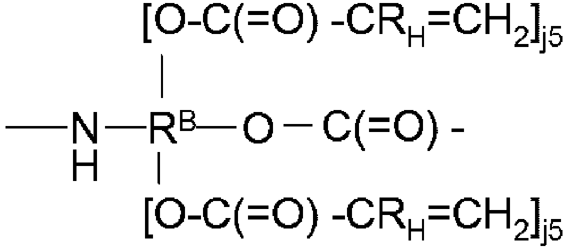 wherein
      each of j5 is independently 0 or 1 and
      R^{B} is a divalent, trivalent or tetravalent group selected from the group consisting of C₁-C₁₀ aliphatic group; C₃-C₁₂ cycloaliphatic group; C₅-C₁₄ aromatic or alkylaromatic group, optionally comprising at least one heteroatom selected from N, O and S;
   (R^{A}-II) 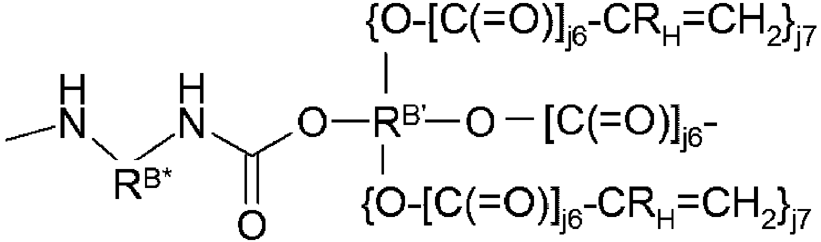 wherein
      j6 is 0 or 1;
      each of j7 is independently 0 or 1;
      R^{B'} is a divalent, trivalent or tetravalent group selected from the group consisting of C₁-C₁₀ aliphatic group; C₃-C₁₂ cycloaliphatic group; C₅-C₁₄ aromatic or alkylaromatic group, optionally comprising at least one heteroatom selected from N, O and S; and
      R^{B*} has the same meanings defined above for R^{B'} or it is a group of formula (R^{B}-I): 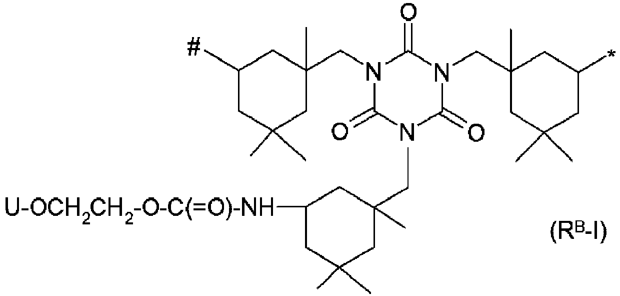
      wwherein
         substituent U is selected from the groups (U-I) to (U-III) as defined above and
         * and # indicate the bonding site to the nitrogen atoms in formula (R^{A}-II) above.

Preferably, in any of polymer (P^{P}) and polymer (P^{U}), said group (U) is bonded to one chain end of said chain (R_{pf}) via group of formula :

* -R¹⁰-NH-C(=O)-O-R¹¹- #

wherein
* indicate the bond to group (U)
# indicate the bond to chain (R_{pf})
R¹⁰ is a linear or branched alkyl chain having from 1 to 6 carbon atoms, optionally substituted with a group comprising a tri-alkoxy-silyl group; R¹¹ is a sigma bond or a poly(oxy)alkylene chain [chain (Rₐ^)], wherein said chain (Rₐ^) comprises from 1 to 50 fluorine-free oxyalkylene units, said units being the same or different each other and being selected from -CH(J*)CH(J)-O, wherein each of J and J* is independently selected from hydrogen atom, straight or branched alkyl or aryl, preferably hydrogen atom, methyl, ethyl or phenyl.

According to an alternative embodiment, each of polymer (P^{P}) and polymer (P^{U}) comprises at its chain end(s) group (Si).

Preferably, said group (Si) is a group of formula:

-Si-(OR³⁰)₃

wherein R³⁰ is a linear or branched alkyl chain having from 1 to 12 carbon atoms.

Preferably, said polymer (P^{x}) comprises at one chain end a perfluoroalkyl group selected in the group comprising, more preferably consisting of:

-CF₃, -C₂F₅, -C₃F₇, -CF₂Cl, -CF₂CF₂Cl and -C₃F₆Cl.

Said polymer (P^{x}) comprising a perfluoroalkyl group as defined above is also referred to as "monofunctional polymer (P^{x})".

As it is known in the art, the functionality (F) of the polymers according to the present invention polymer P, i.e. the average number of functional groups per molecule of polymer, is from 1.00 to 2.00. Bifunctional polymers P typically have a functionality (F) from 1.50 to 1.99, more preferably from 1.70 to 1.98 and even more preferably from 1.85 to 1.95. The functionality (F) can be calculated for example as disclosed in EP 1810987 A (SOLVAY SOLEXIS S.P.A.).

Composition (C^{POL}) as defined above can be advantageously prepared starting from (per)fluoropolyether (PFPE) polymers comprising a (per)fluoropolyether chain [chain (R_{pf})] having two chain ends bonded to opposite sides of said chain (R_{pf}), both said chain ends comprising at least one -OH group.

For example, first, a composition [composition (INT)] can be prepared by a method comprising the following steps (i) to (iii) :
(i) providing a (per)fluoropolyether (PFPE) polymer comprising a (per)fluoropolyether chain [chain (R_{pf})] having two chain ends bonded to opposite sides of said chain (R_{pf}), both said chain ends comprising at least one -OH group;
(ii) converting at least a part of said -OH groups into a leaving group for a nucleophilic substitution reaction;
(iii) contacting the composition obtained in step (ii) with at least one tertiary amine, thus obtaining a composition [composition (INT)] comprising:
   - a (per)fluoropolyether polymer [polymer (P^{INT})] comprising a (per)fluoropolyether chain [chain (R_{pf})] having two chain ends bonded to opposite sides of said chain (R_{pf}), wherein one chain end comprises at least one group comprising at least one quaternary ammonium salt group [group (N⁺)] and the other chain end comprises at least one -OH group;
   - a (per)fluoropolyether polymer [polymer (P^{N})] comprising a (per)fluoropolyether chain [chain (R_{pf})] having two chain ends bonded to opposite sides of said chain (R_{pf}), wherein both chain ends comprise at least one group (N⁺), and
   - the (per)fluoropolyether (PFPE) polymer provided in step (i).

Composition (INT) as defined above is another aspect of the present invention .

Composition (C^{POL}) according to the present invention can be advantageously prepared starting from composition (INT) as defined above, according to a method comprising :
(iv) contacting composition (INT) as defined above with at least one compound selected in the group consisting of :
   - a compound [A] bearing at least one group (U) as defined above and at least one halogen atom or at least one isocyanate group; or
   - a compound [B] bearing at least one group (E) as defined above and at least one halogen atom or at least one isocyanate group; or
   - a compound [C] bearing at least one group (Si) as defined above and at least one halogen atom or at least one isocyanate group,
thus obtaining said composition (C^{POL}).

Furthermore and advantageously, composition (INT) as defined above can be subjected to purification according to methods known in the art in order to purify at least polymer (P^{INT}).

According to this embodiment, polymer (P^{INT}) is then contacted with at least one of compound [A], [B] or [C] as defined in step (iv) above, thus obtaining polymer (P^{P}) as a pure compound.

It will be hence clear to those skilled in the art that polymer (P^{P}) per se is a further object of the present invention.

According to one embodiment, composition (C^{POL}) can be prepared via a one-pot synthesis, i.e. without recovering said composition (INT) from the reaction mixture.

According to this embodiment, composition (C^{POL}) is prepared via a method comprising the following steps:
(i) providing a (per)fluoropolyether (PFPE) polymer comprising a (per)fluoropolyether chain [chain (R_{pf})] having two chain ends bonded to opposite sides of said chain (R_{pf}), both said chain ends comprising at least one -OH group;
(ii) converting at least a part of said -OH groups into a leaving group for a nucleophilic substitution reaction;
(iii) contacting the composition obtained in step (ii) with at least one tertiary amine, thus obtaining a composition [composition (INT)] as defined above;
(iv) contacting composition (INT) as obtained in step (iii) with at least one compound selected in the group consisting of :
   - a compound [A] bearing at least one group (U) as defined above and at least one halogen atom or at least one isocyanate group; or
   - a compound [B] bearing at least one group (E) as defined above and at least one halogen atom or at least one isocyanate group; or
   - a compound [C] bearing at least one group (Si) as defined above and at least one halogen atom or at least one isocyanate group,
thus obtaining composition (C^{POL}).

The (per)fluoropolyether (PFPE) polymer used as starting material in step (i) above is preferably a PFPE polymer complying with the following formula :

(PFPE-i) HO-(R_{pf})-OH

(PFPE-ii) HO-[CH(J*)CH(J)O]ₜ₁-(R_{pf})-[OCH(J)CH(J*)]ₜ₂-OH

wherein
(R_{pf}) is as defined above,
t1 and t2, each independently, is an integer from 1 to 50, and
J and J*, each independently, is as defined above for chain (Ra).

Advantageously, under step (ii) above, at least a part of said -OH groups in the PFPE polymer of formula (PFPE-i) or (PFPE-ii) is converted into a group selected in the group comprising, preferably consisting of: mesyl, tosyl, perfluorobutanesulfonyl or trifluoromethylsulfonyl group.

Preferably, under step (iii) above, said at least one tertiary amine complies with the following formula :

N(R^{h1})(R^{h2})(R^{h3})

wherein
each of R^{h1}, R^{h2}, and R^{h3} is independently selected from linear or branched alkyl chain having from 1 to 20 carbon atoms, more preferably from 3 to 18, benzyl or at least two of R^{h1}, R^{h2}, and R^{h3} together with the nitrogen atom form an aliphatic ring comprising 4 or 5 carbon atoms and the nitrogen atom or R^{h1}, R^{h2}, and R^{h3} together with the nitrogen atom form an aromatic ring comprising 4 or 5 carbon atoms and the nitrogen atom.

Preferably, at least one of R^{h1}, R^{h2}, and R^{h3} is a linear or branched alkyl chain having from 6 to 20, more preferably from 6 to 18 carbon atoms.

Preferably, at least two of R^{h1}, R^{h2}, and R^{h3} are independently a linear or branched alkyl chain having from 1 to 6, more preferably from 1 to 4 carbon atoms.

More preferably, said at least one tertiary amine is selected in the group comprising, even more preferably consisting of: N,N-dimethylbenzyl amine; pyridine; 4-nonadecylpyridine; 1-methylpyrrole; 1-butylpyrrolidine; tributylamine; triisooctylamine; trihexylamine; trioctylamine; N,N-dimethylhexadecyl amine; N,N-dimethyloctylamine; triethylamine.

Preferably, under step (iv), the reaction with said compound [A] bearing at least one group (U) and at least one isocyanate group, is preferred.

Preferably, under step (iv), said compound [A] complies with the following formula:

O=C=N-R²⁰-R²¹-CR_{H}=CH₂

wherein
R_{H} has the same meanings defined above for group (U);
R²⁰ is a linear or branched alkyl chain having from 1 to 6 carbon atoms, optionally substituted with a group comprising a tri-alkoxy-silyl group;
R²¹ is a divalent group of formula -O-C(=O)-, -O-C(=O)-NH-CO-, -O-C(=O)-R^{A}- wherein R^{A} is as defined above for group (U-III).

More preferably, said compound [A] is selected in the group comprising, even more preferably consisting of: isocyanatoethyl methacrylate (IEM), allyl isocyanate, 3-isopropenyl-α,α-dimethylbenzyl isocyanate, vinyl isocyanate, acryloyl isocyanate, methacryloyl isocyanate, 2-isocyanatoethyl acrylate, 1,1-(bisacryloyloxy methyl) ethyl isocyanate, 2-(2-metacryloyloxyethyloxy) ethyl isocyanate.

As disclosed above, said composition (C^{POL}) can be used as such or it can be used as additive in a suitable solvent.

Preferably, composition (DIL) comprises from 0.01 to 50 wt.% of composition (C^{POL}) and from 50 to 99.99 wt.% of at least one solvent (S) as defined above.

Advantageously, said solvent (S) is selected from (per)fluoropolyether polymers having at the chain ends thereof at least one, more preferably at least two, unsaturated group(s).

According to another embodiment, the present invention relates to a method for imparting antimicrobial properties to an article, said method comprising :
(a) providing composition (C^{POL}) or composition (DIL) as defined above;
(b) proving an article having at least one surface;
(c) contacting said composition (C^{POL}) or composition (DIL) and at least one part of said at least one surface;
(d) coating said at least one part of said at least one surface with said composition (C^{POL}) or composition (DIL).

Advantageously, said article is selected from articles made of plastic, metal, glass, paper or textiles, such as notably cotton paper. More preferably, said article is a banknote.

Preferably, when composition (C^{POL}) or composition (DIL) comprises polymer (P^{P}) and (P^{U}) comprising said group (U), step (d) is performed by curing said composition (C^{POL}) or composition (DIL) more preferably with UV rays.

The invention will be herein after illustrated in greater detail by means of the Examples contained in the following Experimental Section; the Examples are merely illustrative and are by no means to be interpreted as limiting the scope of the invention.

### Experimental Section

### Materials and methods

Fluorolink^{®} E10H and Fluorolink^{®} MD700 were obtained from Solvay Specialty Polymers Italy S.p.A.

The following were obtained by Aldrich: bis(trifluoromethyl)benzene, trietylamine, methanesulfonyl chloride, N,N-dimethylhexadecylamine, 2,6-di-tert-butyl-4-methylphenol (BHT) and 2-isocyanatoethyl methacrylate.

SnapCure^{™} 1030 was obtained from Alfa Aesar Gmbh &Co..

¹H-NMR and ¹⁹F-NMR were recorded on a Agilent System 500 operating at 499.86 MHz for ¹H and 470.30 MHz for ¹⁹F.

FT-IR spectra were measured with a ThermoScientific FTIR spectrophotometer on liquid samples as thin films on KBr. Spectra were acquired by co-adding 256 scans with a resolution of 2 cm ⁻¹.

### Example 1 - Synthesis of Composition C^{POL} - A

**Step 1:** A 4-necked round bottom flask with 0.5 L capacity, kept under nitrogen atmosphere and equipped with a condenser, a mechanical stirrer, a thermometer probe and a dropping funnel, was charged with 150 g (EW= g/mol 906 ; 165.6 meq ) of Fluorolink^{®} E10H, 100 g of 1,3-bis(trifluoromethyl)benzene and 5.9 g trietylamine (58.4 meq). Thereafter, the flask was refrigerated and 5.8 g of methanesulfonyl chloride (50.6 meq) were added at such a rate as to keep the temperature in the range of 15 - 30°C. When the methanesulfonyl chloride addition was complete, the reaction-mixture was let under stirring at 25-30°C for further 6 hours. The reaction mixture was then brought to neutrality by adding a 4M aqueous solution of HCl and the thereby formed organic phase was separated. After distillation of the fluorinated solvent under reduced pressure (T= 80°C, P= 2Pa), 152.1 g of a limpid liquid were isolated and characterized. ¹H-NMR analysis confirmed that the obtained product was the starting Fluorolink^{®} E10H with 29% of the -OH groups converted into mesylate esters.

**Step 2:** A 4-necked round bottom flask of 0.25 L capacity, kept under nitrogen atmosphere and equipped with a condenser, a mechanical stirrer, a thermometer probe and a dropping funnel, was charged with 100 g of 1,3- bis(trifluoromethyl)benzene and 9.0 g ( 33.4 meq) of N,N-dimethylhexadecylamine. 100 g of the product obtained in Step 1 were dropped into the flask and the resulting mixture was heated up to 90° and let under vigorous stirring for 20 hours. Distillation under reduced pressure (T= 80°C, P= 2Pa) to remove the solvent provided 107.1 g of a waxy product. ¹H NMR analysis confirmed the quantitative conversion of the mesylate esters into the target quaternary ammonium salt.

**Step 3:** A 4-necked round bottom flask of 100 ml capacity, equipped with a condenser, a mechanical stirrer a dropping funnel and a thermometer probe, was charged with 100 g of the product obtained in Step 2, 3,9*10⁻² g of 2,6-di-tert-butyl-4-methylphenol (BHT), 8.5*10⁻² g of SnapCure^{™} 1030 and the obtained mixture was heated up to 50°C.

11.8 g of 2-isocyanatoethyl methacrylate (76.1 meq) were then slowly added, the temperature was raised up to 60 °C and the reaction mixture was let under vigorous stirring for 3 hours. Thereafter, 1.6 g of methanol were added, the reaction mixture was stirred for further 2 hours and dried under reduced pressure (T= 60°C, P= 2Pa) obtaining 108.3 g of C^{POL}- A.

C^{POL}- A was recovered as a viscous slightly yellow liquid, statistically comprising :
41.2% of Polymer P^{P}-A;
50.4% of Polymer P^{U}-A and
8.4% of Polymer P^{N}-A

### Measurement of anti-bacterial activity on glass substrate

Anti-bacterial activity of a composition comprising 80 wt.% of Fluorolink^{®} MD700 and 20 wt.% of the composition of polymers C^{POL}- A prepared under Example 1 above was evaluated according to ISO 22196.

The growth of two species of bacteria, namely *S. aureus and E. Coli,* was evaluated onto glass substrate, prepared as described in the ISO 22196 test.

The glass substrate contacted with the composition according to the present invention passed the ISO 22196 test.

## Claims

1. A composition [composition (C^{POL}2. comprising :
- a (per)fluoropolyether polymer [polymer (P^{P})] comprising a (per)fluoropolyether chain [chain (R_{pf})] having two chain ends bonded to opposite sides of said chain (R_{pf}), wherein one chain end comprises at least one group comprising at least one quaternary ammonium salt group [group (N⁺)] and the other chain end comprises at least one group selected in the group consisting of: alkoxysilane [group (Si)] and cross-linkable group, preferably selected from unsaturated moiety [group (U)] and epoxide [group (E)];
- a (per)fluoropolyether polymer [polymer (P^{U})] comprising a (per)fluoropolyether chain [chain (R_{pf})] having two chain ends bonded to opposite sides of said chain (R_{pf}), wherein both chain ends comprise one group elected in the group consisting of: alkoxysilane [group (Si)] and cross-linkable group, preferably selected from unsaturated moiety [group (U)] and epoxide [group (E)]; and
- a (per)fluoropolyether polymer [polymer (P^{N})] comprising a (per)fluoropolyether chain [chain (R_{pf})] having two chain ends bonded to opposite sides of said chain (R_{pf}), wherein both chain ends comprise at least one group (N⁺)

2. The composition (C^{POL}4. according to Claim 1, said composition (C^{POL}) comprising :
- from 5 to 50 wt.% of said polymer (P^{P}),
- from 0.01 to 15 wt.% of said polymer (P^{N}) and
- from 35 to 94.99 wt.% of said polymer (P^{U})
the amounts being based on 100 wt.% of said composition (C^{POL}).

3. The composition (C^{POL}6. according to Claim 1, said composition (C^{POL}) further comprising :
- a (per)fluoropolyether polymer [polymer (P^{x})] comprising a (per)fluoropolyether chain [chain (R_{pf})] having two chain ends bonded to opposite sides of said chain (R_{pf}), wherein one chain end comprises a perfluoroalkyl group and the other chain end comprises either at least one group (N⁺) as defined above or at least one group selected in the group consisting of: alkoxysilane [group (Si)] and cross-linkable group, preferably selected from unsaturated moiety [group (U)] and epoxide [group (E)].

4. The composition (C^{POL}8. according to any one of the preceding Claims, wherein in any of polymer (P^{P}), polymer (P^{U}), polymer (P^{N}) and polymer (P^{x}), said chain (R_{pf}) is a chain of formula
-D-(CFX^{#})_{z1}-O(R_{f})(CFX^{*})_{z2}-D^{*}-
wherein
z1 and z2, equal or different from each other, are equal to or higher than 1;
X^{#} and X^{*}, equal or different from each other, are -F or -CF₃,
provided that when z1 and/or z2 are higher than 1, X^{#} and X* are -F;
D and D*, equal or different from each other, are a sigma bond or an alkylene chain comprising from 1 to 6, said alkyl chain being optionally substituted with at least one perfluoroalkyl group comprising from 1 to 3 carbon atoms; (R_{f}) comprises, preferably consists of, repeating units R°, said repeating units being independently selected from the group consisting of:
(i) -CFXO-, wherein X is F or CF₃;
(ii) -CFXCFXO-, wherein X, equal or different at each occurrence, is F or CF₃, with the proviso that at least one of X is -F;
(iii) -CF₂CF₂CW₂O-, wherein each of W, equal or different from each other, are F, CI, H;
(iv) -CF₂CF₂CF₂CF₂O-;
(v) -(CF₂)ⱼ-CFZ-O- wherein j is an integer from 0 to 3 and Z is a group of general formula -O-R_{(f-a)}-T, wherein R_{(f-a)} is a fluoropolyoxyalkene chain comprising a number of repeating units from 0 to 10, said recurring units being chosen among the following : -CFXO- , -CF₂CFXO-, -CF₂CF₂CF₂O-, - CF₂CF₂CF₂CF₂O-, with each of X being independently F or CF₃ and T being a C₁-C₃ perfluoroalkyl group

5. The composition (C^{POL}10. according to any one of the preceding Claims, wherein in any of polymer (P^{P}), polymer (P^{N}) and polymer (P^{x}), said group (N⁺) is selected in the group comprising, preferably consisting of:
(N⁺-I) -N⁺(R^{h1})(R^{h2})(R^{h3})
wherein
each of R^{h1}, R^{h2}, and R^{h3} is independently selected from linear or branched alkyl chain having from 1 to 20 carbon atoms, more preferably from 1 to 18, even more preferably from 3 to 18, benzyl or at least two of R^{h1}, R^{h2}, and R^{h3} together with the nitrogen atom form a 5- or 6-membered aliphatic ring or R^{h1}, R^{h2}, and R^{h3} together with the nitrogen atom form a 5- or 6- membered aromatic ring .

6. The composition (C^{POL} according to any one of the preceding Claims, wherein in any of polymer (P^{P}) and polymer (P^{U}), said group (U) is selected in the group consisting of:
(U-I) -O-C(=O)-CR_{H}=CH₂
(U-II) -O-C(=O)-NH-CO-CR_{H}=CH₂
(U-III) -O-C(=O)-R^{A}-CR_{H}=CH₂
wherein
R_{H} is H or a C₁-C₆ alkyl group;
R^{A} is selected from the group consisting of (R^{A}-I) and (R^{A}-II):
(R^{A}-I) 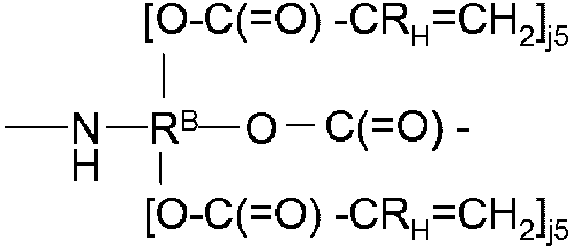 wherein
each of j5 is independently 0 or 1 and
R^{B} is a divalent, trivalent or tetravalent group selected from the group consisting of C₁-C₁₀ aliphatic group; C₃-C₁₂ cycloaliphatic group; C₅-C₁₄ aromatic or alkylaromatic group, optionally comprising at least one heteroatom selected from N, O and S;
(R^{A}-II) 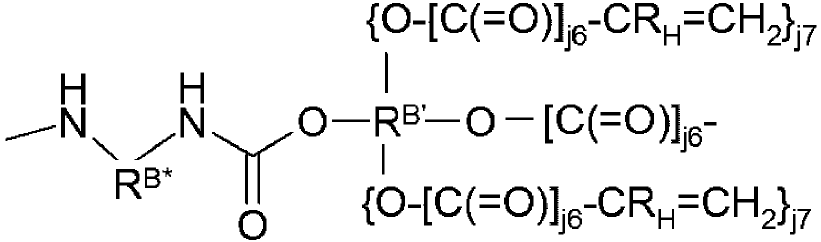 wherein
j6 is 0 or 1;
each of j7 is independently 0 or 1;
R^{B'} is a divalent, trivalent or tetravalent group selected from the group consisting of C₁-C₁₀ aliphatic group; C₃-C₁₂ cycloaliphatic group; C₅-C₁₄ aromatic or alkylaromatic group, optionally comprising at least one heteroatom selected from N, O and S; and
R^{B*} has the same meanings defined above for R^{B'} or it is a group of formula (R^{B}-I): 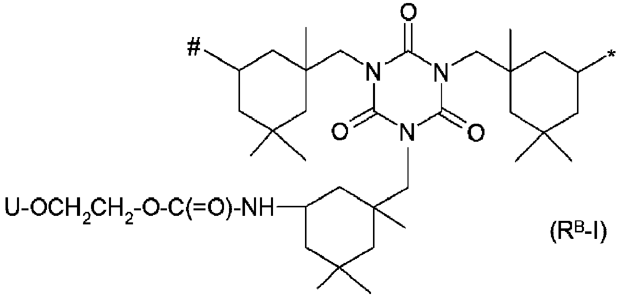
wherein
substituent U is selected from the groups (U-I) to (U-III) as defined above and * and # indicate the bonding site to the nitrogen atoms in formula (R^{A}-II) above.

7. The composition (C^{POL} according to any one of the preceding Claims, wherein
- in any of polymer (P^{P}), polymer (P^{N}) and polymer (P^{x}), group (N⁺) is bonded to one chain end of said chain (R_{pf}) via a sigma bond or via a poly(oxy)alkylene chain [chain (Rₐ)]; and/or
- in any of polymer (P^{P}) and polymer (P^{U}), said group (U) is bonded to one chain end of said chain (R_{pf}) via group of formula :
* -R¹⁰-NH-C(=O)-O-R¹¹- #
wherein
* indicate the bond to group (U)
# indicate the bond to chain (R_{pf})
R¹⁰ is a linear or branched alkyl chain having from 1 to 6 carbon atoms, optionally substituted with a group comprising a tri-alkoxy-silyl group;
R¹¹ is a sigma bond or a poly(oxy)alkylene chain [chain (Rₐ^)], wherein said chain (Rₐ^) comprises from 1 to 50 fluorine-free oxyalkylene units, said units being the same or different each other and being selected from
-CH(J*)CH(J)-O,
wherein each of J and J* is independently selected from hydrogen atom, straight or branched alkyl or aryl.

8. A method for the manufacture of a composition [composition (INT)] comprising:
- a (per)fluoropolyether polymer [polymer (P^{INT})] comprising a (per)fluoropolyether chain [chain (R_{pf})] having two chain ends bonded to opposite sides of said chain (R_{pf}), wherein one chain end comprises at least one group comprising at least one quaternary ammonium salt group [group (N⁺)] and the other chain end comprises at least one -OH group;
- a (per)fluoropolyether polymer [polymer (P^{N})] comprising a (per)fluoropolyether chain [chain (R_{pf})] having two chain ends bonded to opposite sides of said chain (R_{pf}), wherein both chain ends comprise at least one group (N⁺), and
- a (per)fluoropolyether (PFPE) polymer comprising a (per)fluoropolyether chain [chain (R_{pf})] having two chain ends bonded to opposite sides of said chain (R_{pf}), both said chain ends comprising at least one -OH group, said method comprising the steps from (i) to (iii) :
(i) providing a (per)fluoropolyether (PFPE) polymer comprising a (per)fluoropolyether chain [chain (R_{pf})] having two chain ends bonded to opposite sides of said chain (R_{pf}), both said chain ends comprising at least one -OH group;
(ii) converting at least a part of said -OH groups into a leaving group for a nucleophilic substitution reaction;
(iii) contacting the composition obtained in step (ii) with at least one tertiary amine, thus obtaining composition (INT) as defined above.

9. The method according to Claim 8, wherein
-- the PFPE polymer in step (i) complies with the following formula :
(PFPE-i) HO-(R_{pf})-OH
(PFPE-ii) HO-[CH(J*)CH(J)O]ₜ₁-(R_{pf})-[OCH(J)CH(J*)]ₜ₂-OH
wherein
(R_{pf}) is as defined above,
t1 and t2, each independently, is an integer from 1 to 50, and
J and J*, each independently, is as defined above for chain (Ra); and/or
-- in step (ii) at least a part of said -OH groups in the PFPE polymer of formula (PFPE-i) or (PFPE-ii) provided in step (i) is converted into a group selected in the group comprising: mesyl, tosyl, perfluorobutanesulfonyl or trifluoromethylsulfonyl group; and/or
-- in step (iii) said at least one tertiary amine complies with the following formula :
N(R^{h1})(R^{h2})(R^{h3})
wherein
each of R^{h1}, R^{h2}, and R^{h3} is independently selected from linear or branched alkyl chain having from 1 to 20 carbon atoms, benzyl or at least two of R^{h1}, R^{h2}, and R^{h3} together with the nitrogen atom form an aliphatic ring comprising 4 or 5 carbon atoms and the nitrogen atom or R^{h1}, R^{h2}, and R^{h3} together with the nitrogen atom form an aromatic ring comprising 4 or 5 carbon atoms and the nitrogen atom.

10. A composition [composition (INT)] comprising:
- a (per)fluoropolyether polymer [polymer (P^{INT})] comprising a (per)fluoropolyether chain [chain (R_{pf})] having two chain ends bonded to opposite sides of said chain (R_{pf}), wherein one chain end comprises at least one group comprising at least one quaternary ammonium salt group [group (N⁺)] and the other chain end comprises at least one -OH group;
- a (per)fluoropolyether polymer [polymer (P^{N})] comprising a (per)fluoropolyether chain [chain (R_{pf})] having two chain ends bonded to opposite sides of said chain (R_{pf}), wherein both chain ends comprise at least one group (N⁺), and
- a (per)fluoropolyether (PFPE) polymer comprising a (per)fluoropolyether chain [chain (R_{pf})] having two chain ends bonded to opposite sides of said chain (R_{pf}), both said chain ends comprising at least one -OH group.

11. A method for the manufacture of composition (C^{POL} as defined in any one of Claims 1 to 7, said method comprising :
(iv) contacting composition (INT) as defined in Claim 10 with at least one compound selected in the group consisting of :
- a compound [A] bearing at least one group (U) as defined above and at least one halogen atom or at least one isocyanate group; or
- a compound [B] bearing at least one group (E) as defined above and at least one halogen atom or at least one isocyanate group; or
- a compound [C] bearing at least one group (Si) as defined above and at least one halogen atom or at least one isocyanate group,
thus obtaining composition (C^{POL}).

12. The method according to Claim 11, wherein in step (iv), said compound [A] complies with the following formula:
O=C=N-R²⁰-R²¹-CR_{H}=CH₂
wherein
R_{H} has the same meanings defined above for group (U);
R²⁰ is a linear or branched alkyl chain having from 1 to 6 carbon atoms, optionally substituted with a group comprising a tri-alkoxy-silyl group; and
R²¹ is a divalent group of formula -O-C(=O)-, -O-C(=O)-NH-CO-, and -O-C(=O)-R^{A}- wherein R^{A} is as defined in Claim 5.

13. A (per)fluoropolyether polymer [polymer (P^{P} comprising a (per)fluoropolyether chain [chain (R_{pf})] having two chain ends bonded to opposite sides of said chain (R_{pf}), wherein one chain end comprises at least one group comprising at least one quaternary ammonium salt group [group (N⁺)] and the other chain end comprises at least one group selected in the group consisting of: alkoxysilane [group (Si)] and cross-linkable group, preferably selected from unsaturated moiety [group (U)] and epoxide [group (E)].

14. A composition [composition (DIL)] comprising composition (C^{POL} as defined in any one of Claims 1 to 7 and at least one solvent [solvent (S)] selected in the group comprising : (per)fluorinated fluids, optionally comprising at least one unsaturated moiety; hydrogenated fluids, optionally comprising at least one unsaturated moiety.

15. A method for imparting antimicrobial properties to a substrate, said method comprising :
(a) providing composition (C^{POL}) as defined in any one of Claims 1 to 7 or composition (DIL) as defined in Claim 14;
(b) proving an article having at least one surface;
(c) contacting said composition (C^{POL}) or composition (DIL) and at least one part of said at least one surface;
(d) coating said at least one part of said at least one surface with said composition (C^{POL}) or composition (DIL).

## Patentansprüche

1. Zusammensetzung [Zusammensetzung (C^{POL})], umfassend:
- ein (Per) fluorpolyether-Polymer [Polymer (P^{P})], umfassend eine (Per)fluorpolyetherkette [Kette (R_{pf})] mit zwei Kettenenden, die an entgegengesetzte Seiten der Kette (R_{pf}) gebunden sind, wobei ein Kettenende mindestens eine Gruppe mit mindestens einer quartären Ammoniumsalzgruppe [Gruppe (N⁺)] umfasst und das andere Kettenende mindestens eine Gruppe umfasst, die aus der Gruppe bestehend aus einem Alkoxysilan [Gruppe (Si)] und einer vernetzbaren Gruppe ausgewählt ist und vorzugsweise aus einer ungesättigten Gruppierung [Gruppe (U)] und einem Epoxid [Gruppe (E)], ausgewählt ist;
- ein (Per)fluorpolyether-Polymer [Polymer (P^{U})], umfassend eine (Per)fluorpolyetherkette [Kette (R_{pf})] mit zwei Kettenenden, die an entgegengesetzte Seiten der Kette (R_{pf}) gebunden sind, wobei beide Kettenenden eine Gruppe umfassen, die aus der Gruppe bestehend aus einem Alkoxysilan [Gruppe (Si)] und einer vernetzbaren Gruppe ausgewählt ist und vorzugsweise aus einer ungesättigten Gruppierung [Gruppe (U)] und einem Epoxid [Gruppe (E)], ausgewählt ist; und
- ein (Per)fluorpolyether-Polymer [Polymer (P^{N})], umfassend eine (Per)fluorpolyetherkette [Kette (R_{pf})] mit zwei Kettenenden, die an entgegengesetzte Seiten der Kette (R_{pf}) gebunden sind, wobei beide Kettenenden mindestens eine Gruppe (N⁺) umfassen.

2. Zusammensetzung (C^{POL}) nach Anspruch 1, wobei die Zusammensetzung (C^{POL}) Folgendes umfasst:
- 5 bis 50 Gew.-% des Polymers (P^{P}),
- 0,01 bis 15 Gew.-% des Polymers (P^{N}) und
- 35 bis 94,99 Gew.-% des Polymers (P^{U}),
wobei sich die Mengen auf 100 Gew.-% der Zusammensetzung (C^{POL}) beziehen.

3. Zusammensetzung (C^{POL}) nach Anspruch 1, wobei die Zusammensetzung (C^{POL}) ferner Folgendes umfasst:
- ein (Per)fluorpolyether-Polymer [Polymer (P^{x})], umfassend eine (Per)fluorpolyetherkette [Kette (R_{pf})] mit zwei Kettenenden, die an entgegengesetzte Seiten der Kette (R_{pf}) gebunden sind, wobei ein Kettenende eine Perfluoralkylgruppe umfasst und das andere Kettenende entweder mindestens eine Gruppe (N⁺) gemäß obiger Definition oder mindestens eine Gruppe umfasst, die aus der Gruppe bestehend aus einem Alkoxysilan [Gruppe (Si)] und einer vernetzbaren Gruppe ausgewählt ist und vorzugsweise aus einer ungesättigten Gruppierung [Gruppe (U)] und einem Epoxid [Gruppe (E)], ausgewählt ist.

4. Zusammensetzung (C^{POL}) nach einem der vorhergehenden Ansprüche, wobei in jedem von Polymer (P^{P}), Polymer (P^{U}), Polymer (P^{N}) und Polymer (P^{x}) die Kette (R_{pf}) eine Kette der Formel
-D-(CFX^{#})_{z1}-O(R_{f})(CFX*)_{z2}-D*-
ist, wobei
z1 und z2 gleich oder voneinander verschieden sind und gleich oder größer als 1 sind;
X^{#} und X* gleich oder voneinander verschieden sind und für -F oder -CF₃ stehen,
mit der Maßgabe, dass dann, wenn z1 und/oder z2 größer als 1 sind, X^{#} und X* für -F stehen;
D und D* gleich oder voneinander verschieden sind und für eine Sigma-Bindung oder eine Alkylenkette mit 1 bis 6 Kohlenstoffatomen steht, wobei die Alkylkette gegebenenfalls durch mindestens eine Perfluoralkylgruppe mit 1 bis 3 Kohlenstoffatomen substituiert ist;
(R_{f}) Wiederholungseinheiten R^{o} umfasst und vorzugsweise daraus besteht, wobei die Wiederholungseinheiten unabhängig aus der Gruppe bestehend aus:
(i) -CFXO-, wobei X für F oder CF₃ steht;
(ii) -CFXCFXO-, wobei X bei jedem Auftreten gleich oder verschieden ist und für F oder CF₃ steht, mit der Maßgabe, dass mindestens eines von X für -F steht;
(iii) -CF₂CF₂CW₂O-, wobei W bei jedem Auftreten gleich oder verschieden ist und für F, Cl oder H steht;
(iv) -CF₂CF₂CF₂CF₂O-;
(v) -(CF₂)ⱼ-CFZ-O-, wobei j für eine ganze Zahl von 0 bis 3 steht und Z für eine Gruppe der allgemeinen Formel -O-R_{(f-a)}-T steht, wobei R_{(f-a)} für eine Fluorpolyoxyalkylenkette mit einer Zahl von Wiederholungseinheiten von 0 bis 10 steht, wobei die Wiederholungseinheiten aus den Folgenden ausgewählt sind: -CFXO-, -CF₂CFXO-, -CF₂CF₂CF₂O-, -CF₂CF₂CF₂CF₂O, wobei X jeweils unabhängig für F oder CF₃ steht und T für eine C₁-C₃-Perfluoralkylgruppe steht, ausgewählt sind.

5. Zusammensetzung (C^{POL}) nach einem der vorhergehenden Ansprüche, wobei in jedem von Polymer (P^{P}), Polymer (P^{N}) und Polymer (P^{x}) die Gruppe (N⁺) aus der Gruppe ausgewählt ist, die Folgendes umfasst und vorzugsweise daraus besteht:
(N⁺-I) -N⁺(R^{h1})(R^{h2})(R^{h3})
wobei
R^{h1}, R^{h2} und R^{h3} jeweils unabhängig aus einer linearen oder verzweigten Alkylkette mit 1 bis 20, weiter bevorzugt 1 bis 18 und noch weiter bevorzugt 3 bis 18 Kohlenstoffatomen und Benzyl ausgewählt sind oder mindestens zwei von R^{h1}, R^{h2} und R^{h3} zusammen mit dem Stickstoffatom einen 5- oder 6-gliedrigen aliphatischen Ring bilden oder R^{h1}, R^{h2} und R^{h3} zusammen mit dem Stickstoffatom einen 5- oder 6-gliedrigen aromatischen Ring bilden.

6. Zusammensetzung (C^{POL}) nach einem der vorhergehenden Ansprüche, wobei in jedem von Polymer (P^{P}) und Polymer (P^{U}) die Gruppe (U) aus der Gruppe bestehend aus
(U-I) -O-C(=O)-CR_{H}=CH₂
(U-II) -O-C(=O)-NH-CO-CR_{H}=CH₂
(U-III) -O-C(=O)-R^{A}-CR_{H}=CH₂
ausgewählt ist, wobei
R_{H} für H oder eine C₁-C₆-Alkylgruppe steht;
R^{A} aus der Gruppe bestehend aus (R^{A}-I) und (R^{A}-II) ausgewählt ist:
(R^{A}-I) 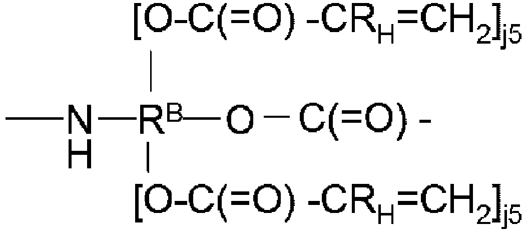 wobei
j5 jeweils unabhängig für 0 oder 1 steht und
R^{B} für eine zweiwertige, dreiwertige oder vierwertige Gruppe steht, die aus der Gruppe bestehend aus einer aliphatischen C₁-C₁₀-Gruppe;
einer cycloaliphatischen C₃-C₁₂-Gruppe; einer aromatischen oder alkylaromatischen C₅-C₁₄-Gruppe, die gegebenenfalls mindestens ein aus N, O und S ausgewähltes Heteroatom umfasst; ausgewählt ist;
(R^{A}-II) 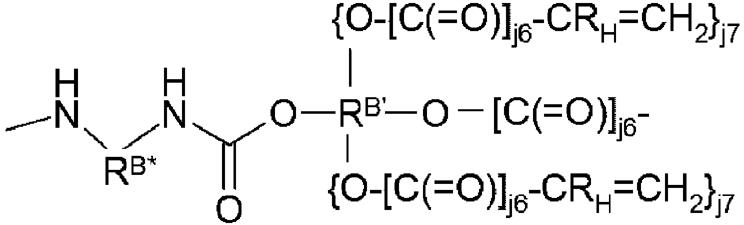 wobei
j6 für 0 oder 1 steht;
j7 jeweils unabhängig für 0 oder 1 steht;
R^{B'} für eine zweiwertige, dreiwertige oder
vierwertige Gruppe steht, die aus der Gruppe bestehend aus einer aliphatischen C₁-C₁₀-Gruppe;
einer cycloaliphatischen C₃-C₁₂-Gruppe; einer aromatischen oder alkylaromatischen C₅-C₁₄-Gruppe, die gegebenenfalls mindestens ein aus N, O und S ausgewähltes Heteroatom umfasst; ausgewählt ist; und
R^{B*} die gleichen Bedeutungen wie oben für R^{B'} definiert aufweist oder für eine Gruppe der Formel (R^{B}-I) : 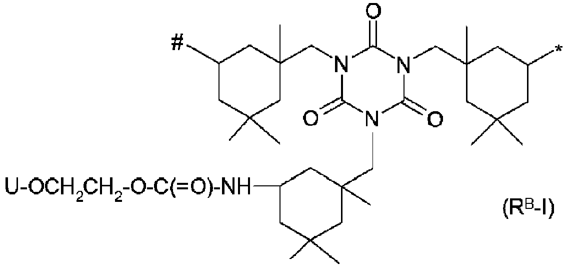
steht, wobei
der Substituent U aus den Gruppen (U-I) bis (U-III) gemäß obiger Definition ausgewählt ist und * und # die Bindungsstelle an die Stickstoffatome in obiger Formel (R^{A}-II) anzeigen.

7. Zusammensetzung (C^{POL}) nach einem der vorhergehenden Ansprüche, wobei
- in jedem von Polymer (P^{P}), Polymer (P^{N}) und Polymer (P^{x}) die Gruppe (N⁺) über eine Sigma-Bindung oder über eine Poly(oxy)alkylenkette [Kette (Rₐ)] an ein Kettenende der Kette (R_{pf}) gebunden ist; und/oder
- in jedem von Polymer (P^{P}) und Polymer (P^{U}) die Gruppe (U) über eine Gruppe der Formel:
*-R¹⁰-NH-C(=O)-O-R¹¹-#
an ein Kettenende der Kette (R_{pf}) gebunden ist, wobei
* die Bindung an die Gruppe (U) anzeigt,
# die Bindung an die Kette (R_{pf}) anzeigt,
R¹⁰ für eine lineare oder verzweigte Alkylkette mit 1 bis 6 Kohlenstoffatomen, die gegebenenfalls durch eine Gruppe, die eine Trialkoxysilylgruppe umfasst, substituiert ist, steht;
R¹¹ für eine Sigma-Bindung oder eine Poly(oxy)alkylenkette [Kette (Rₐ^)] steht, wobei die Kette (Rₐ^) 1 bis 50 fluorfreie Oxyalkyleneinheiten umfasst, wobei die Einheiten gleich oder voneinander verschieden sind und aus
-CH(J*)CH(J)-O
ausgewählt sind, wobei J und J* jeweils unabhängig aus einem Wasserstoffatom, einem geraden oder verzweigten Alkyl oder einem Aryl ausgewählt sind.

8. Verfahren zur Herstellung einer Zusammensetzung [Zusammensetzung (INT)], umfassend:
- ein (Per) fluorpolyether-Polymer [Polymer (P^{INT})], umfassend eine (Per)fluorpolyetherkette [Kette (R_{pf})] mit zwei Kettenenden, die an entgegengesetzte Seiten der Kette (R_{pf}) gebunden sind, wobei ein Kettenende mindestens eine Gruppe mit mindestens einer quartären Ammoniumsalzgruppe [Gruppe (N⁺)] umfasst und das andere Kettenende mindestens eine - OH-Gruppe umfasst,
- ein (Per)fluorpolyether-Polymer [Polymer (P^{N})], umfassend eine (Per)fluorpolyetherkette [Kette (R_{pf})] mit zwei Kettenenden, die an entgegengesetzte Seiten der Kette (R_{pf}) gebunden sind, wobei beide Kettenenden mindestens eine Gruppe (N⁺) umfassen, und
ein (Per)fluorpolyether(PFPE)-Polymer, umfassend eine (Per)fluorpolyetherkette [Kette (R_{pf})] mit zwei Kettenenden, die an entgegengesetzte Seiten der Kette (R_{pf}) gebunden sind, wobei beide Kettenenden mindestens eine -OH-Gruppe umfassen,
wobei das Verfahren die Schritte (i) bis (iii) umfasst:
(i) Bereitstellen eines (Per)fluorpolyether(PFPE)-Polymers, umfassend eine (Per)fluorpolyetherkette [Kette (R_{pf})] mit zwei Kettenenden, die an entgegengesetzte Seiten der Kette (R_{pf}) gebunden sind, wobei beide Kettenenden mindestens eine -OH-Gruppe umfassen;
(ii) Umwandeln mindestens eines Teils der -OH-Gruppen in eine Abgangsgruppe für eine nucleophile Substitutionsreaktion;
(iii) Inkontaktbringen der in Schritt (ii) erhaltenen Zusammensetzung mit mindestens einem tertiären Amin, wodurch die Zusammensetzung (INT) gemäß obiger Definition erhalten wird.

9. Verfahren nach Anspruch 8, wobei
- das in Schritt (i) verwendete PFPE-Polymer der folgenden Formel entspricht:
(PFPE-i) HO-(R_{pf})-OH
(PFPE-ii) HO-[CH(J*)CH(J)O]ₜ₁-(R_{pf}) - [OCH(J)CH(J*)]ₜ₂-OH
wobei
(R_{pf}) wie oben definiert ist,
t1 und t2 jeweils unabhängig für eine ganze Zahl von 1 bis 50 stehen und
J und J* jeweils unabhängig wie für die Kette (Ra) definiert sind; und/oder
- in Schritt (ii) mindestens ein Teil der -OH-Gruppen in dem in Schritt (i) bereitgestellten PFPE-Polymer der Formel (PFPE-i) oder (PFPE-ii) in eine Gruppe umgewandelt wird, die aus der Gruppe umfassend eine Mesyl-, Tosyl-, Perfluorbutansulfonyl- oder Trifluormethylsulfonylgruppe ausgewählt ist; und/oder
- in Schritt (iii) das mindestens eine tertiäre Amin der folgenden Formel entspricht:
N(R^{h1})(R^{h2})(R^{h3})
wobei
R^{h1}, R^{h2} und R^{h3} jeweils unabhängig aus einer linearen oder verzweigten Alkylkette mit 1 bis 20 Kohlenstoffatomen und Benzyl ausgewählt sind oder mindestens zwei von R^{h1}, R^{h2} und R^{h3} zusammen mit dem Stickstoffatom einen aliphatischen Ring mit 4 oder 5 Kohlenstoffatomen und dem Stickstoffatom bilden oder R^{h1}, R^{h2} und R^{h3} zusammen mit dem Stickstoffatom einen aromatischen Ring mit 4 oder 5 Kohlenstoffatomen und dem Stickstoffatom bilden.

10. Zusammensetzung [Zusammensetzung (INT)], umfassend:
- ein (Per) fluorpolyether-Polymer [Polymer (P^{INT})], umfassend eine (Per)fluorpolyetherkette [Kette (R_{pf})] mit zwei Kettenenden, die an entgegengesetzte Seiten der Kette (R_{pf}) gebunden sind, wobei ein Kettenende mindestens eine Gruppe mit mindestens einer quartären Ammoniumsalzgruppe [Gruppe (N⁺)] umfasst und das andere Kettenende mindestens eine - OH-Gruppe umfasst,
- ein (Per)fluorpolyether-Polymer [Polymer (P^{N})], umfassend eine (Per)fluorpolyetherkette [Kette (R_{pf})] mit zwei Kettenenden, die an entgegengesetzte Seiten der Kette (R_{pf}) gebunden sind, wobei beide Kettenenden mindestens eine Gruppe (N⁺) umfassen, und
ein (Per)fluorpolyether(PFPE)-Polymer, umfassend eine (Per)fluorpolyetherkette [Kette (R_{pf})] mit zwei Kettenenden, die an entgegengesetzte Seiten der Kette (R_{pf}) gebunden sind, wobei beide Kettenenden mindestens eine -OH-Gruppe umfassen.

11. Verfahren zur Herstellung der Zusammensetzung (C^{POL}) gemäß einem der Ansprüche 1 bis 7, wobei das Verfahren Folgendes umfasst:
(iv) Inkontaktbringen der Zusammensetzung (INT) gemäß Anspruch 10 mit mindestens einer Verbindung, die aus der Gruppe bestehend aus
- einer Verbindung [A] mit mindestens einer Gruppe (U) gemäß obiger Definition und mindestens einem Halogenatom oder mindestens einer Isocyanatgruppe; oder
- einer Verbindung [B] mit mindestens einer Gruppe (E) gemäß obiger Definition und mindestens einem Halogenatom oder mindestens einer Isocyanatgruppe; oder
- einer Verbindung [C] mit mindestens einer Gruppe (Si) gemäß obiger Definition und mindestens einem Halogenatom oder mindestens einer Isocyanatgruppe ausgewählt ist, wodurch die Zusammensetzung (C^{POL}) erhalten wird.

12. Verfahren nach Anspruch 11, wobei in Schritt (iv) die Verbindung [A] der folgenden Formel entspricht:
O=C=N-R²⁰-R²¹-CR_{H}=CH₂
wobei
R_{H} die gleichen Bedeutungen wie oben für Gruppe (U) definiert aufweist;
R²⁰ für eine lineare oder verzweigte Alkylkette mit 1 bis 6 Kohlenstoffatomen, die gegebenenfalls durch eine Gruppe, die eine Trialkoxysilylgruppe umfasst, substituiert ist, steht und
R²¹ für eine zweiwertige Gruppe der Formel -O-C(=O)-, -O-C(=O)-NH-CO- und -O-C(=O)-R^{A}- steht, wobei R^{A} wie in Anspruch 5 definiert ist.

13. (Per)fluorpolyether-Polymer [Polymer (P^{P})], umfassend eine (Per)fluorpolyetherkette [Kette (R_{pf})] mit zwei Kettenenden, die an entgegengesetzte Seiten der Kette (R_{pf}) gebunden sind, wobei ein Kettenende mindestens eine Gruppe mit mindestens einer quartären Ammoniumsalzgruppe [Gruppe (N⁺)] umfasst und das andere Kettenende mindestens eine Gruppe umfasst, die aus der Gruppe bestehend aus einem Alkoxysilan [Gruppe (Si)] und einer vernetzbaren Gruppe ausgewählt ist und vorzugsweise aus einer ungesättigten Gruppierung [Gruppe (U)] und einem Epoxid [Gruppe (E)], ausgewählt ist.

14. Zusammensetzung [Zusammensetzung (DIL)], umfassend die Zusammensetzung (C^{POL}) gemäß einem der Ansprüche 1 bis 7 und mindestens ein Lösungsmittel [Lösungsmittel (S)], das aus der Gruppe umfassend (per)fluorierte Fluide, die gegebenenfalls mindestens eine ungesättigte Gruppierung umfassen, und hydrierte Fluide, die gegebenenfalls mindestens eine ungesättigte Gruppierung umfassen, ausgewählt ist.

15. Verfahren zum Ausrüsten eines Substrats mit antimikrobiellen Eigenschaften, wobei das Verfahren Folgendes umfasst:
(a) Bereitstellen der Zusammensetzung (C^{POL}) gemäß einem der Ansprüche 1 bis 7 oder der Zusammensetzung (DIL) gemäß Anspruch 14;
(b) Bereitstellen eines Artikels mit mindestens einer Oberfläche;
(c) Inkontaktbringen der Zusammensetzung (C^{POL}) bzw. Zusammensetzung (DIL) und mindestens eines Teils der mindestens einen Oberfläche;
(d) Beschichten des mindestens einen Teils der mindestens einen Oberfläche mit der Zusammensetzung (C^{POL}) bzw. Zusammensetzung (DIL).

## Revendications

1. Composition [composition (C^{POL})] comprenant :
- un polymère (per)fluoropolyéther [polymère (P^{P})] comprenant une chaîne (per)fluoropolyéther [chaîne (R_{pf})] ayant deux extrémités de chaîne liées aux côtés opposés de ladite chaîne (R_{pf}), dans laquelle une extrémité de chaîne comprend au moins un groupe comprenant au moins un groupe de sel d'ammonium quaternaire [groupe (N⁺)] et l'autre extrémité de chaîne comprend au moins un groupe choisi dans le groupe constitué par : alcoxysilane [groupe (Si)] et groupe réticulable, de préférence choisi parmi un groupement insaturé [groupe (U)] et un époxyde [groupe (E)] ;
- un polymère (per) fluoropolyéther [polymère (P^{U})] comprenant une chaîne (per)fluoropolyéther [chaîne (R_{pf})] ayant deux extrémités de chaîne liées aux côtés opposés de ladite chaîne (R_{pf}), dans laquelle les deux extrémités de chaîne comprennent un groupe choisi dans le groupe constitué par : alcoxysilane [groupe (Si)] et groupe réticulable, de préférence choisi parmi un groupement insaturé [groupe (U)] et un époxyde [groupe (E)] ; et
- un polymère (per)fluoropolyéther [polymère (P^{N})] comprenant une chaîne (per)fluoropolyéther [chaîne (R_{pf})] ayant deux extrémités de chaîne liées aux côtés opposés de ladite chaîne (R_{pf}), dans laquelle les deux extrémités de chaîne comprennent au moins un groupe (N⁺).

2. Composition (C^{POL}) selon la revendication 1, ladite composition (C^{POL}) comprenant :
- de 5 à 50 % en poids dudit polymère (P^{P}),
- de 0,01 à 15 % en poids dudit polymère (P^{N}) et
- de 35 à 94,99 % en poids dudit polymère (P^{U})
les quantités étant basées sur 100 % en poids de ladite composition (C^{POL}) .

3. Composition (C^{POL}) selon la revendication 1, ladite composition (C^{POL}) comprenant en outre :
- un polymère (per)fluoropolyéther [polymère (P^{x})] comprenant une chaîne (per)fluoropolyéther [chaîne (R_{pf})] ayant deux extrémités de chaîne liées aux côtés opposés de ladite chaîne (R_{pf}), dans laquelle une extrémité de chaîne comprend un groupe perfluoroalkyle et l'autre extrémité de chaîne comprend soit au moins un groupe (N⁺) tel que défini ci-dessus, soit au moins un groupe choisi dans le groupe constitué par : alcoxysilane [groupe (Si)] et groupe réticulable, de préférence choisi parmi un groupement insaturé [groupe (U)] et un époxyde [groupe (E)].

4. Composition (C^{POL}) selon l'une quelconque des revendications précédentes, dans laquelle, dans l'un quelconque parmi le polymère (P^{P}), le polymère (P^{U}), le polymère (P^{N}) et le polymère (P^{x}), ladite chaîne (R_{pf}) est une chaîne de formule
**-D-(CFX^{#})_{z1}-O(R_{f})(CFX^{*})_{z2}-D^{*}-**
dans laquelle
z1 et z2, égaux ou différents l'un de l'autre, sont égaux ou supérieurs à 1 ;
X^{#} et X*, égaux ou différents l'un de l'autre, sont -F ou -CF₃,
à condition que, lorsque z1 et/ou z2 sont supérieurs à 1, X^{#} et X* sont -F ;
D et D*, égaux ou différents l'un de l'autre, sont une liaison sigma ou une chaîne alkylène comprenant de 1 à 6 atomes de carbone, ladite chaîne alkyle étant éventuellement substituée par au moins un groupe perfluoroalkyle comprenant de 1 à 3 atomes de carbone ; (R_{f}) comprend, de préférence est constitué par, des unités répétitives R°, lesdites unités répétitives étant indépendamment sélectionnées dans le groupe constitué par
(i) -CFXO-, dans lequel X est F ou CF₃ :
(ii) -CFXCFXO-, dans lequel X, égal ou différent à chaque occurrence, est F ou CF₃, à condition qu'au moins un des X soit -F ;
(iii) -CF₂CF₂CW₂O-, dans lequel chacun des W, égaux ou différents les uns des autres, sont F, Cl, H ;
(iv) -CF₂CF₂CF₂CF₂O- ;
(v) - (CF₂)ⱼ-CFZ-O-, dans lequel j est un entier de 0 à 3 et Z est un groupe de formule générale -O-R_{(f-a)}-T, dans lequel R_{(f-a)} est une chaîne fluoropolyoxyalkène comprenant un nombre d'unités répétitives de 0 à 10, lesdites unités répétitives étant choisies parmi les suivantes : -CFXO-, -CF₂CFXO-, -CF₂CF₂CF₂O-, -CF₂CF₂CF₂CF₂O-, X étant indépendamment F ou CF₃ et T étant un groupe perfluoroalkyle en C₁-C₃.

5. Composition (C^{POL}) selon l'une quelconque des revendications précédentes, dans laquelle, dans l'un quelconque parmi le polymère (P^{P}), le polymère (P^{N}) et le polymère (P^{x}), ledit groupe (N⁺) est choisi dans le groupe comprenant, de préférence constitué par :
(N⁴-I) -N⁺(R^{h1})(R^{h2})(R^{h3})
dans laquelle
chacun parmi R^{h1}, R^{h2} et R^{h3} est indépendamment choisi parmi une chaîne alkyle linéaire ou ramifiée ayant de 1 à 20 atomes de carbone, de préférence de 1 à 18, encore plus préférablement de 3 à 18, benzyle ou au moins deux parmi R^{h1}, R^{h2} et R^{h3} forment avec l'atome d'azote un cycle aliphatique à 5 ou 6 chaînons ou R^{h1}, R^{h2} et R^{h3} forment avec l'atome d'azote un cycle aromatique à 5 ou 6 chaînons.

6. Composition (C^{POL}) selon l'une quelconque des revendications précédentes, dans laquelle, dans l'un quelconque parmi le polymère (P^{P}) et le polymère (P^{U}), ledit groupe (U) est choisi dans le groupe constitué par
(U-I) -O-C(=O)-CR_{H}=CH₂
(U-II) -O-C(=O)-NH-CO-CR_{H}=CH2
(U-III) -O-C(=O)-R^{A}-CR_{H}=CH₂
dans lesquelles
R_{H} est H ou un groupe alkyle en Ci-Ce ;
R^{A} est choisi dans le groupe constitué par (R^{A}-I) et (R^{A}-II) :
(R^{A}-I) 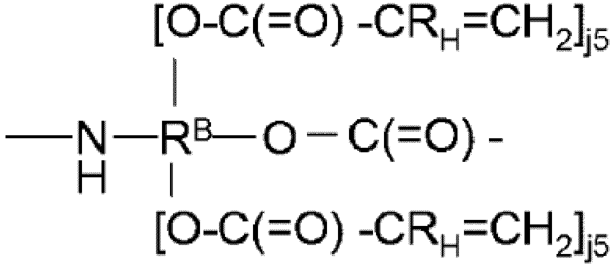 dans laquelle
chacun parmi j5 est indépendamment 0 ou 1 et
R^{B} est un groupe divalent, trivalent ou tétravalent choisi dans le groupe constitué par un groupe aliphatique en C₁-C₁₀, un groupe cycloaliphatique en C₃-C₁₂, un groupe aromatique ou alkylaromatique en C₅-C₁₄, comprenant éventuellement au moins un hétéroatome choisi parmi N, O et S ;
(R^{A}-II) 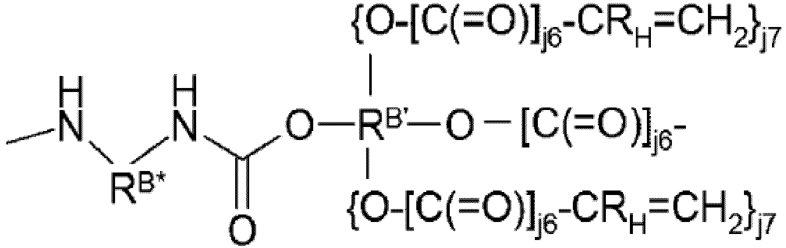 dans laquelle
j6 est 0 ou 1 ;
chacun parmi j7 est indépendamment 0 ou 1 ;
R^{B'} est un groupe divalent, trivalent ou tétravalent choisi dans le groupe constitué par un groupe aliphatique en C₁-C₁₀, un groupe cycloaliphatique en C₃-C₁₂, un groupe aromatique ou alkylaromatique en C₅-C₁₄, comprenant éventuellement au moins un hétéroatome choisi parmi N, O et S ; et
R^{B*} a la même signification que celle définie ci-dessus pour R^{B'} ou est un groupe de formule (R^{B}-I) : 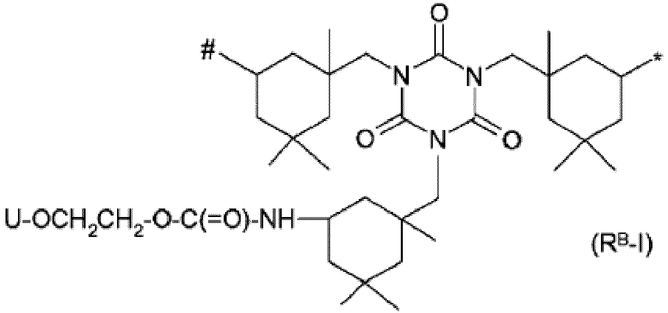
dans laquelle
le substituant U est choisi parmi les groupes (U-I) à (U-III) tels que définis ci-dessus et
* et # indiquent le site de liaison aux atomes d'azote dans la formule (R^{A}-II) ci-dessus.

7. Composition (C^{POL}) selon l'une quelconque des revendications précédentes, dans laquelle
- dans l'un quelconque parmi le polymère (P^{P}), le polymère (P^{N}) et le polymère (P^{x}), ledit groupe (N⁺) est lié à une extrémité de chaîne de ladite chaîne (R_{pf}) via une liaison sigma ou via une chaîne poly(oxy) alkylène [chaîne (Rₐ)] ; et/ou
- dans l'un quelconque parmi le polymère (P^{P}) et le polymère (P^{U}), ledit groupe (U) est lié à une extrémité de chaîne de ladite chaîne (R_{pf}) via un groupe de formule
* -R¹⁰-NH-C(=O)-O-R¹¹-#
dans laquelle
* indique la liaison au groupe (U)
# indique la liaison à la chaîne (R_{pf})
R¹⁰ est une chaîne alkyle linéaire ou ramifiée ayant de 1 à 6 atomes de carbone, éventuellement substituée par un groupe comprenant un groupe tri-alcoxy-silyle ;
R¹¹ est une liaison sigma ou une chaîne poly(oxy)alkylène [chaîne (Rₐ^)], dans laquelle ladite chaîne (Rₐ^) comprend de 1 à 50 unités oxyalkylène sans fluor, lesdites unités étant identiques ou différentes les unes des autres et étant sélectionnées parmi
-CH(J*)CH(J)-O,
dans laquelle J et J* sont indépendamment choisis parmi un atome d'hydrogène, un alkyle linéaire ou ramifié ou un aryle.

8. Procédé pour la fabrication d'une composition [composition (INT)] comprenant :
- un polymère (per)fluoropolyéther [polymère (P^{INT})] comprenant une chaîne (per)fluoropolyéther [chaîne (R_{pf})] ayant deux extrémités de chaîne liées aux côtés opposés de ladite chaîne (R_{pf}), dans laquelle une extrémité de chaîne comprend au moins un groupe comprenant au moins un groupe de sel d'ammonium quaternaire [groupe (N⁺)] et l'autre extrémité de chaîne comprend au moins un groupe -OH ;
- un polymère (per)fluoropolyéther [polymère (P^{N})] comprenant une chaîne (per)fluoropolyéther [chaîne (R_{pf})] ayant deux extrémités de chaîne liées aux côtés opposés de ladite chaîne (R_{pf}), dans laquelle les deux extrémités de chaîne comprennent au moins un groupe (N⁺), et
- un polymère (per)fluoropolyéther (PFPE) comprenant une chaîne (per)fluoropolyéther [chaîne (R_{pf})] ayant deux extrémités de chaîne liées aux côtés opposés de ladite chaîne (R_{pf}), chacune de ces extrémités de chaîne comprenant au moins un groupe -OH,
ledit procédé comprenant les étapes (i) à (iii) :
(i) la fourniture d'un polymère (per) fluoropolyéther (PFPE) comprenant une chaîne (per)fluoropolyéther [chaîne (R_{pf})] ayant deux extrémités de chaîne liées aux côtés opposés de ladite chaîne (R_{pf}), chacune de ces extrémités de chaîne comprenant au moins un groupe -OH ;
(ii) la conversion d'au moins une partie desdits groupes -OH en un groupe partant pour une réaction de substitution nucléophile ;
(iii) la mise en contact de la composition obtenue à l'étape (ii) avec au moins une amine tertiaire, permettant ainsi d'obtenir la composition (INT) telle que définie ci-dessus.

9. Procédé selon la revendication 8, dans lequel
-- le polymère PFPE de l'étape (i) répond à la formule suivante :
(PFPE-i) HO-(R_{pf})-OH
(PFPE-ii) HO-[CH(J*)CH(J)O]ₜ₁-(R_{pf})-[OCH(J)CH(J*)ₜ₂-OH
dans lesquelles
(R_{pf}) est tel que défini ci-dessus,
t1 et t2, chacun indépendamment, sont un entier de 1 à 50, et
J et J*, chacun indépendamment, sont tels que définis ci-dessus pour la chaîne (Rₐ) ; et/ou
-- à l'étape (ii), au moins une partie desdits groupes - OH dans le polymère PFPE de formule (PFPE-i) ou (PFPE-ii) fourni à l'étape (i) est convertie en un groupe choisi dans le groupe comprenant : mésyle, tosyle, perfluorobutanesulfonyle ou trifluorométhylsulfonyle ; et/ou
-- à l'étape (iii), ladite au moins une amine tertiaire répond à la formule suivante :
N(R^{h1})(R^{h2})(R^{h3})
dans laquelle
chacun parmi R^{h1}, R^{h2} et R^{h3} est indépendamment choisi parmi une chaîne alkyle linéaire ou ramifiée ayant de 1 à 20 atomes de carbone, benzyle ou au moins deux parmi R^{h1}, R^{h2} et R^{h3} forment avec l'atome d'azote un cycle aliphatique comprenant 4 ou 5 atomes de carbone et l'atome d'azote ou R^{h1}, R^{h2} et R^{h3} forment avec l'atome d'azote un cycle aromatique comprenant 4 ou 5 atomes de carbone et l'atome d'azote.

10. Composition [composition (INT)] comprenant :
- un polymère (per)fluoropolyéther [polymère (P^{INT})] comprenant une chaîne (per)fluoropolyéther [chaîne (R_{pf})] ayant deux extrémités de chaîne liées aux côtés opposés de ladite chaîne (R_{pf}), dans laquelle une extrémité de chaîne comprend au moins un groupe comprenant au moins un groupe de sel d'ammonium quaternaire [groupe (N⁺)] et l'autre extrémité de chaîne comprend au moins un groupe -OH ;
- un polymère (per)fluoropolyéther [polymère (P^{N})] comprenant une chaîne (per)fluoropolyéther [chaîne (R_{pf})] ayant deux extrémités de chaîne liées aux côtés opposés de ladite chaîne (R_{pf}), dans laquelle les deux extrémités de chaîne comprennent au moins un groupe (N⁺), et
- un polymère (per)fluoropolyéther (PFPE) comprenant une chaîne (per)fluoropolyéther [chaîne (R_{pf})] ayant deux extrémités de chaîne liées aux côtés opposés de ladite chaîne (R_{pf}), chacune de ces extrémités de chaîne comprenant au moins un groupe -OH.

11. Procédé pour la fabrication de la composition (C^{POL}) telle que définie dans l'une quelconque des revendications 1 à 7, ledit procédé comprenant :
(iv) la mise en contact de la composition (INT) telle que définie dans la revendication 10 avec au moins un composé choisi dans le groupe constitué par :
- un composé [A] comportant au moins un groupe (U) tel que défini ci-dessus et au moins un atome d'halogène ou au moins un groupe isocyanate ; ou
- un composé [B] comportant au moins un groupe (E) tel que défini ci-dessus et au moins un atome d'halogène ou au moins un groupe isocyanate ; ou
- un composé [C] comportant au moins un groupe (Si) tel que défini ci-dessus et au moins un atome d'halogène ou au moins un groupe isocyanate,
permettant ainsi d'obtenir la composition (C^{POL}).

12. Procédé selon la revendication 11, dans lequel, à l'étape (iv), ledit composé [A] répond à la formule suivante :
O=C=N-R²⁰-R²¹-CR_{H}=CH₂
dans laquelle
R_{H} a la même signification que celle définie ci-dessus pour le groupe (U) ;
R²⁰ est une chaîne alkyle linéaire ou ramifiée ayant de 1 à 6 atomes de carbone, éventuellement substituée par un groupe comprenant un groupe tri-alcoxy-silyle ; et R²¹ est un groupe divalent de formule -O-C(=O)-, -O-C(=O)-NH-CO-, et -O-C(=O)-R^{A}-, dans lesquelles R^{A} est tel que défini dans la revendication 5.

13. Polymère (per)fluoropolyéther [polymère (P^{P})] comprenant une chaîne (per)fluoropolyéther [chaîne (R_{pf})] ayant deux extrémités de chaîne liées aux côtés opposés de ladite chaîne (R_{pf}), dans laquelle une extrémité de chaîne comprend au moins un groupe comprenant au moins un groupe de sel d'ammonium quaternaire [groupe (N⁺)] et l'autre extrémité de chaîne comprend au moins un groupe choisi dans le groupe constitué par : alcoxysilane [groupe (Si)] et groupe réticulable, de préférence choisi parmi un groupement insaturé [groupe (U)] et un époxyde [groupe (E)].

14. Composition [composition (DIL)] comprenant la composition (C^{POL}) telle que définie dans l'une quelconque des revendications 1 à 7 et au moins un solvant [solvant (S)] choisi dans le groupe comprenant : des fluides (per)fluorés, comprenant éventuellement au moins un groupement insaturé ; des fluides hydrogénés, comprenant éventuellement au moins un groupement insaturé.

15. Procédé pour conférer des propriétés antimicrobiennes à un substrat, ledit procédé comprenant :
**(a)** la fourniture d'une composition (C^{POL}) telle que définie dans l'une quelconque des revendications 1 à 7 ou d'une composition (DIL) telle que définie dans la revendication 14 ;
**(b)** la fourniture d'un article ayant au moins une surface ;
**(c)** la mise en contact de ladite composition (C^{POL}) ou composition (DIL) et d'au moins une partie de ladite au moins une surface ;
**(d)** le revêtement de ladite au moins une partie de ladite au moins une surface par ladite composition (C^{POL}) ou composition (DIL).
